(19) **Europäisches Patentamt**
**European Patent Office**
**Office européen des brevets**

(11) **EP 2 610 795 A1**

(12) **EUROPEAN PATENT APPLICATION**

(43) Date of publication:
**03.07.2013 Bulletin 2013/27**

(51) Int Cl.:
***G06Q 10/10*** *(2012.01)*       ***G06Q 30/02*** *(2012.01)*

(21) Application number: **11382403.1**

(22) Date of filing: **26.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefónica, S.A.**
**28013 Madrid (ES)**

(72) Inventors:
 • **Tomé, María, José**
 **28013 Madrid (ES)**

 • **Llanos, David**
 **28013 Madrid (ES)**
 • **Navarro, Joan**
 **28013 Madrid (ES)**

(74) Representative: **Carpintero Lopez, Francisco et al**
 **Herrero & Asociados, S.L.**
 **Alcalá 35**
 **28014 Madrid (ES)**

(54) **Method for estimating proximity between users of communication services**

(57)     Present invention refers to a method for estimating proximity between two end users of communication services. The method comprises the steps of: obtaining the communications established between said two; assigning weights to each communication depending on the communication service used for the communication; comparing a distribution along the time of the weighted communications with a desired time pattern; assigning a second weight to each communication according to the comparison with the desired time pattern; assigning a level of relevance to each communication depending on the type of communication used; and outputting a final weight, depending on all the weights assigned previously and the level of relevance of each communication between the two users, as an estimation of their proximity.

**FIG. 1**

EP 2 610 795 A1

**Description**

**TECHNICAL FIELD OF THE INVENTION**

The present invention relates generally to communication services and more specifically to the relationship among users of said communication services and their estimated social proximity.

**BACKGROUND OF THE INVENTION**

Social relationships are built upon mutual interactions and influences between individuals of a given group. This kind of relationships become especially relevant, for example, when designing a product targeted at a specific type of user (e.g. teenagers younger than 16, married, etc.). Actually, individual tendencies, habits, and bents can be fairly estimated when analyzing these group dynamics and behaviors under different situations. For example, a product rejection or acceptation might be known in advance according to such analysis. Therefore this is an appealing area for measuring the social trust between two users.

With the expansion of social networks (SNs) in the digital world, users bump into a new scenario where the ways they have to reach another person have significantly increased. At the same time, users tend to use different mechanisms to contact with the different people belonging to their network, depending on the communication purpose. For this reason, there are some SNs that are mostly used for managing your professional relationships, other for entertainment, and others that are built around a certain theme under some special circumstances.

In the prior art it is known a method to discover new social clusters by statistically analysing dyads, or pairs of communications between two users, gathered from IP information. This proposal uses stochastic methods to model dyads and uses machine learning techniques to predict the outcome of semi-supervised dyads' classification problems. Hence, it is aimed at building social clusters (i.e. grouping several users with similar trends) from the dyads rather than supplying a numerical, and deterministic value of social trust.

Social networks as Facebook organize friends according to their profile information, and historical interactions with each other. Nonetheless, neither numerical values nor relationship weights were provided to the end user. In addition, dyads information is only gathered from data that users have put intentionally in the Facebook domain.

Several on-line platforms have emerged in the recent years (such as Facebook, Twitter or MySpace). This platforms are built for specific purposes and do not consider the user relationships dynamicity in terms that each user has a static (i.e. friends can only join or leave) set of friend lists. There is no indicator about the strength of the relationship between users and no information from other platforms is considered. The lack of a generic solution to compute the social trust prevents information gathered from a social network to be exportable to another field.

Klout is a very first attempt to a horizontal solution in the social trust domain. It gathers information from different sources (Twitter, Facebook, Google+, LinkedIn, Foursquare, Youtube, Instagram, Tumblr, Blogger, Wordpress, Last.fm, Flickr), merges them and outputs five social indicators: (i) Klout score that measures the social influence, (ii) true reach that measures the number of people influenced by an user, (iii) amplification that indicates how much a user influences other users, (iv) network that measures the influence of user's network, and (v) finally it provides the user's role within its network (observer, explorer, celebrity, thought leader, curator, specialist, etc.). This technology provides richer information than standalone social networks but (i) it is focused only on the Internet domain, (ii) does not own any dyad information which forces it to rely on untrustable information gathered from third party portals, (iii) does not provide a direct relation between the social influence and the social trust.

A user is not represented by a single social network but by the smart aggregation of many social networks and also from the daily real-life interactions, which allows to build a complete social trust model that considers real life events. Actually, each user is surrounded by a vast amount of unsorted users (also referred to as friends) and events, which existing approaches are often unable to handle.

**SUMMARY OF THE INVENTION**

Present invention serves to solve the aforesaid problem by providing a method to estimate the social proximity between two users of communication services as a telephone service, mobile phone service, online services, email service, chats, Internet social networks as Facebook, Twitter or LinkedIn, by processing its associated data. This is aimed to overcome the typical constraints found when trying to guess the relationship between you and another unknown person that may have some friends in common. The method comprises the steps of:

- obtaining the communications established between said two users in a certain period of time set previously;
- assigning weights to each communication depending on the communication service used for the communication;
- comparing a distribution along the time of the weighted communications obtained in previous step with a desired time pattern set previously;

- assigning a second weight to each communication according to the comparison with the desired time pattern of previous step;
- assigning a level of relevance to each communication depending on the type of communication used, for example a communication can be a call, a SMS, a MMS, a chat, a videoconference, a Facebook comment, an email...;
- outputting a final weight, depending on all the weights assigned previously and the level of relevance of each communication between the two users, as an estimation of their proximity.

Optionally, one embodiment of the invention may comprise the step of assigning an identity for each user gathering personal data which said user shares on the communication services. The personal data may have assigned a level of confidence depending on the way each communication service validate said personal data.

In one embodiment of the invention, the step of comparing the distribution along the time of the communications with a desired time pattern is made using the convolution operator.

Another aspect of the invention refers to the case of the direct communications between two users are null. Present invention may obtain the final weight between said two users as an aggregation of the final weights between users (also called intermediate users) which have direct or indirect communication with the two users (also called end users).

The above features and advantages do not limit the present invention, and those skilled in the art will recognize additional features and advantages upon reading the following detailed description and upon viewing the accompanying drawings.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

**Figure 1** depicts a generic architecture of one embodiment of the invention.
**Figure 2** depicts the three stages of the Dyad Analyzer Module in one embodiment of the invention.
**Figure 3** shows a diagram which represents the user as nodes and their relationships as links.
**Figure 4** depicts the process of collecting the communications between two users and represents their time evolution as a vector.

## DETAILED DESCRIPTION OF THE INVENTION

This invention describes a process for estimating social proximity (i.e. giving a numerical number ranged between 0 and infinite) between two users taking as input data the records from different communication services as a telephone service, mobile phone service, online services, email service, chats, Internet social networks as Facebook, Twitter or LinkedIn... The invention goes beyond classical binary connections (i.e. connected or not connected) and vertical (single source) solutions, and estimates the social trust between two users in a deterministic and tuneable way.

In order to allow multiple source discrimination some embodiments of the invention isolate different communication sources along the whole process. This prevents from possible privacy and data confidentiality issues.

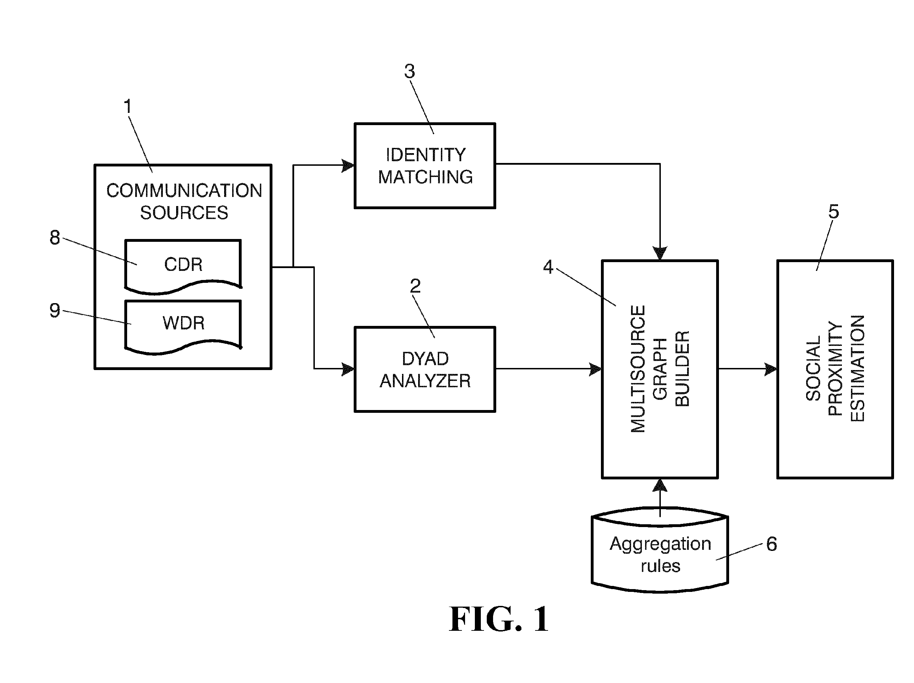

Thus, the invention covers a particular implementation for data sources collected from a given telecommunications operator, that provides records got from calls and messages (also referred to as call detail records (CDR), online social networks (OSNs) and other specific portals where users can contact other users. Figure 1 shows the generic architecture of one embodiment of the invention.

To estimate the social proximity between two users, the modules depicted in Figure 1 are used:

- **Communication Sources Module 1:** this module manages all raw- structured and unstructured-data provided by the different communication services. Depending on the nature of this information, the module distinguishes two different types of sources: (i) CDR 8, which comes from the public switched telephone network operators, and (ii) web detail record, also called WDR 9, which comes from web human intercommunication events.
This module obtains raw information referred to user interactions gathered from different sources. Each communication service, no matter its nature, considers different events according to its environment (e.g. a call detail record might consider calls frequency and duration, while a web detail record would consider the number of emails exchanged between two users).

- **Dyad Analyzer Module 2:** this module converts the raw data collected from the aforementioned communication sources to a set of structured data that they will be called from now on as "structured dyads" -user communication pairs with a weighted numerical value corresponding to the intensity (in terms of frequency and type of event) of their interactions collected from the communication sources module. Indeed, a structured dyad is a relationship between user A and user B with a weight value, ranged between 0 and infinite, that depends on the type and frequency of events between user A and user B- recall that the weight of the dyad between user A and user B, does not necessarily be the same than the weight of the dyad between user B and user A. This numerical value is ranged between zero (meaning no interactions) and a positive real number. The more interactions between each pair of two users, the higher weight will the structured dyad have.

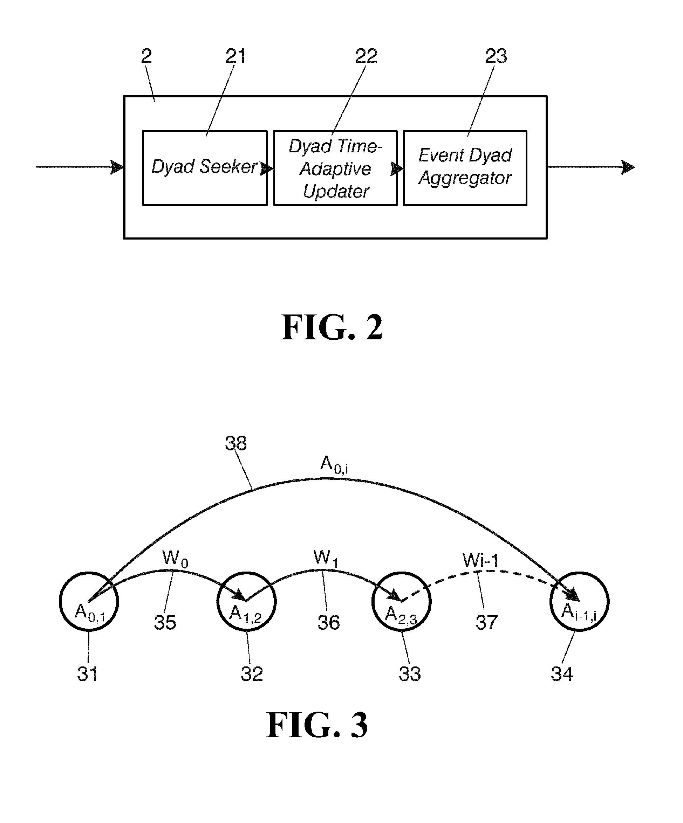

This module is split in three stages, as shown in Figure 2:

a. *Dyad Seeker.* It analyzes the raw data from each event, considering its predefined relevance level, of each communication service in order to find pairs of communications (i.e. dyads). Moreover, it also counts the number of events or communications along the time giving them a temporal meaning.

b. *Dyad Time-Adaptive Updater.* For each previously discovered dyad associated to each event of each source, it considers all its associated time evolution and provides with a numerical value which weights the strength of the dyad along the time.

c. *Event Dyad Aggregator.* Once each dyad is weighted according to a pattern from his temporal evolution, all dyads from different events belonging to the same communication service are aggregated, considering the relevance of each event (e.g. an MMS is more relevant than an e-mail), in order to provide a final weight value for a communication between two users (i.e. weight-aggregated dyad). Therefore, the output of this module and thus of the Dyad Analyzer Module, is a list of dyads associated to each communication service. Up to this stage, data from different sources has never been mixed to avoid privacy issues.

- **Identity Matching Module 3:** this module identifies a user behind different web identities. It analyzes all the identities from all the input sources, and applies a matching process. This process, at the same time, considers a level of confidence associated to each source of information. This is especially relevant since there are some communication services that implement-out of this invention-trusted mechanisms to identify their users. The level of confidence committed to each information source is assigned offline according to its user authentication policies (e.g., dyads gathered from a portal that validates a phone number by sending a SMS will have a higher confidence than those that do not send the SMS). Identity Matching Module looks for different user profiles belonging to a user, gathered from different information sources, because it is common to find a set of matching parameters such as e-mail or phone number and another set of mismatching parameters such as name, surname or address. This module takes into account the context of these parameters (i.e. the information source) and decides if both profiles belong to the same user. Thus, each communication service has a predefined level of confidence depending on the way each source validates the user parameters (e.g. a source that validates the phone number by sending an SMS should have a confidence level of 10).

An example of an embodiment assuming 3 different sources is presented below:

**Source A:** It only checks the phone number.
**Source B:** It checks both phone number and e-mail.
**Source C:** It only checks e-mail.

Assume now the following information obtained from the Data Communication Sources Module:

| Source A | | Source B | | Source C | |
|---|---|---|---|---|---|
| Phone | E-MAIL | Phone | E-MAIL | Phone | E-MAIL |
| 60911111 1 | mail1@m.com | 6092222 22 | mail1@m.com | 6093333 33 | mail1@m.com |
| 6094444 44 | mail2@m.com | --- | --- | 6094444 44 | mail3@m.com |

Hence, this module would decide that:

- User with phone number 609222222 has an e-mail account mail1@m.com. The level of confidence of this source is high because both phone and email have been checked by the source.
- User with phone number 609444444 has an e-mail account mail2@m.com. However, this assert would had a certain degree of uncertainness, which would depend on the confidence values assigned to that source, since the pair 609444444 and mail2@m.com have never been checked as a whole.

- **Multisource Graph Builder Module 4:** this module builds a social graph encompassing all previously registered dyads. A social graph is composed by a set of nodes (each node is associated to a user) and a set of weighted links between nodes (each weighted link corresponds to a sort of communication relationship that join the two users (nodes)). To achieve such a goal, it uses a graph oriented database which loads the previously registered dyads.

The social graph (including nodes and edges) is built for all possible sources within the system according to a set of aggregation rules 6. The aggregation rules consider the relevance of the information gathered from the information sources as shown in the following formula:

$$Multi\ Source\ Dyad_k = \sum_{\forall source_i} \alpha_i \cdot Dyad_k,$$

where $\alpha_i$ is a scalar value which adjusts the relevance of each dyad gathered from source i concerning event k. For example, in a particular embodiment of the invention it is assumed that:

- There are two communication services: a CDR and a WDR.
- The CDR has a predefined weight $\alpha_1$ = 20, and the WDR has a predefined weight of $\alpha_2$ = 10.
- The following table describes the dyads and their weights collected from the CDR and WDR communication services. At this point the weight of each dyad (fourth column) considers (i) its frequency, (ii) time evolution, and (iii) all events (computed at the *Dyad Analyzer* module).

| Dyad | Communication Source | Weight |
|---|---|---|
| UserA -> UserB | CDR | 3 |
| UserA -> UserB | WDR | 5 |
| UserB -> UserA | WDR | 2 |
| UserA -> UserC | CDR | 7 |
| UserB -> UserC | WDR | 6 |

Hence, the output of this module would be as follows:

| Dyad | Communication Source | Multisource Weight |
|---|---|---|
| UserA -> UserB | CDR + WDR | (3 * 20) + (5 * 10) = 110 |
| UserB -> UserA | WDR | (2 * 10) = 20 |
| UserA -> UserC | CDR | (7 * 20) = 140 |
| UserB -> UserC | WDR | (6 * 10) = 60 |

In addition, this layer also includes a logic layer that enables the navigation through this graph which allows finding (i) a certain node within the graph, (ii) discover the shortest path that joins two arbitrary nodes, and (iii) find out the width (i.e. amount of paths that join two nodes with the minimum hops that resolve this relationship) of the relationship between two arbitrary nodes.

**Social Proximity Estimation Module 5:** this module is a front-end interface for this embodiment. The output is the result of the calculations carried out by previous modules. All the operations performed at this stage fulfill the following privacy constraints: (i) source portal (the one accessing this module) is authorized to access the requested data and (ii) any user involved in any operation has previously authorized to publish its associated data to other users. Social Proximity Estimation Module delivers the social distance, the relationship width, and the social path between two users computed upon all previous calculations. Next, these three social measures that the invention provides are described:

- *Social Distance:* it represents the weight of the dyad concerning two users. Up to now, the aforementioned modules calculated the weight of the dyads concerning users with direct interactions; this module uses this knowledge to build and weight, using the formula below, new dyads between users that do not have direct interactions. There is not any restriction about the number of users in-between the requested dyad. As shown in Figure 3, each node 31, 32 , 33, 34 represents a different user and each link 35, 36, 37, 38 is the relationship between two users. Hence, assuming that $w_i$ is the weight at edge i computed by the *MultiSource Graph Builder* module, between both users, and $A_i$ is the accumulated weight between the source user and the end user at edge i is computed as follows:

$$A_{0,1} = w_0,$$

$$A_{i-1,i} = A_{i-1} \cdot \frac{w_i}{w_i + A_{i-1}}.$$

- *Relationship width:* it represents the number of possible paths between two users with the minimal number of hops.
- *Social Path:* it represents the edge-nodes (also referred to as users) between two users. For each user in the social path, it also displays the social distance (computed as stated by the previous formula) between itself and the source user.

Dyad Analyzer Module 2

As mentioned above, this stage is split in three steps: dyad seeking, time-updating dyad, and dyad aggregating. In a particular embodiment of the invention the steps are as follows:

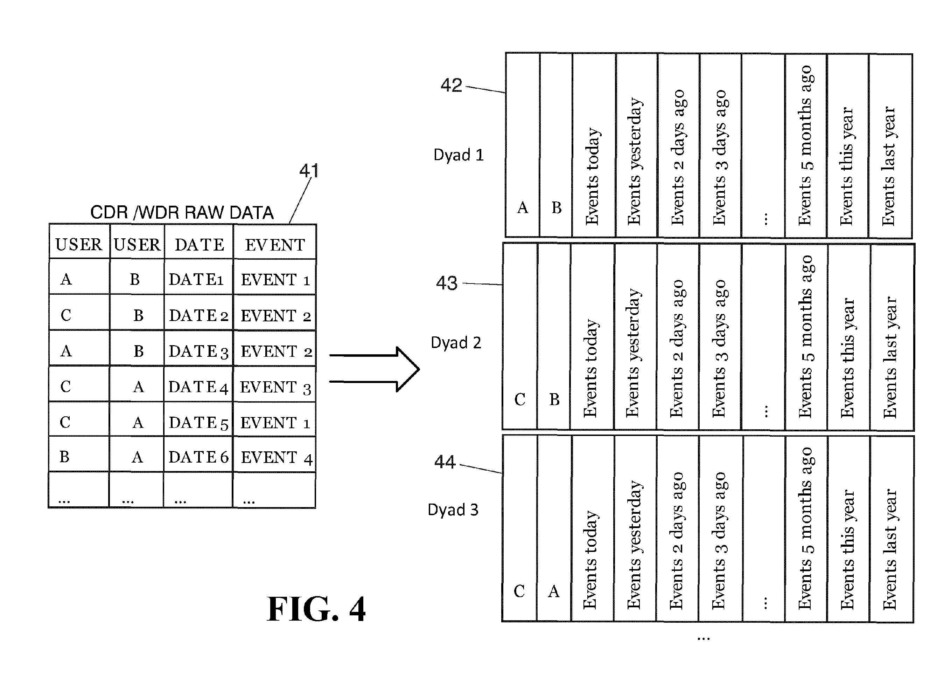

STEP 1: Dyad seeker 21. After analyzing all entries of each communication service, all dyads regarding the same pair of users are summarized in a single row with several columns (also referred to as a vector *Historic* [x]) . Each column corresponds to the number of dyads collected along the time. As it shown in the example below, first column corresponds to dyads (also referred to as events) collected today, second column corresponds to dyads collected yesterday, ninth column corresponds to dyads collected one week ago, ..., seventeenth column corresponds to dyads collected one month ago, so on and so forth). The more columns it builds, the more granularity it will have. Figure 4 depicts this process.

| Events today | Events yesterday | Events 2 days ago | Events 3 days ago | Events 4 days ago | Events 5 days ago | Events 6 days ago | Events this week | Events last week | Events 2 weeks ago | Events 3 weeks ago | Events 4 weeks ago | Events 5 weeks ago | Events 6 weeks ago | Events 7 weeks ago | Events this month | Events last month | Events 2 months ago | Events 3 months ago | Events 4 months ago | Events 5 months ago | Events this year | Events last year |
|---|---|---|---|---|---|---|---|---|---|---|---|---|---|---|---|---|---|---|---|---|---|---|
| | | | | | | | | | | | | | | | | | | | | | | |

STEP 2: Dyad Time-Adaptive Updater 22. For each one of the aforementioned rows of this embodiment, this step compares the time pattern of the row under interest against a desired time pattern and provides a numerical value according to the comparison result. This desired time pattern is provided to the *Dyad Time-Adaptive Updater* module as a row vector (with each column ranged between 0 and 1) with the desired time-behavior shape. It is done making use of the convolution operator (*) as shown below. Assuming that (i) $Historic_{i,k}[x]$ corresponds to the row with the historic evolution of the dyad gathered from source *i* at event *k*, and (ii) *Desired*[x] is a row vector with the same dimensions of *Historic*[x] which contains the desired dyad evolution pattern, the weight of the dyad concerning its time evolution ($HistoricWeight_{i,k}$) is computed as follows:

i. First of all, the columns of the row with less entropy are smoothed (i.e. the ones containing more aggregated values (e.g. events during this year, events during this month, events during this week)):

Phase i.a:

$$Historic_{i,k}[M] = \frac{Historic_{i,k}[M]}{mean\{Historic_{i,k}[x]\}}\Bigg|_{M=this\ week\ column} .$$

Phase i.b:

$$Historic_{i,k}[M] = \frac{Historic_{i,k}[M]}{mean\{Historic_{i,k}[x]\}}\Bigg|_{M=this\ month\ column}.$$

Phase i.c:

$$Historic_{i,k}[M] = \frac{Historic_{i,k}[M]}{mean\{Historic_{i,k}[x]\}}\Bigg|_{M=this\ year\ column}.$$

ii. Next, the obtained smoothed vector is normalized with respect of its maximum in order to obtain a final bounded weight:

$$\overline{H_{i,k}[x]} = \frac{Historic_{i,k}[x]}{max\{Historic_{i,k}[x]\}}.$$

iii. Finally, the convolution operator is applied and the expected weight value (*HistoricWeight*$_{i,k}$[D]) corresponding to dyad D is obtained:

$$SPEH_{i,k}[x] = \left(\overline{H_{i,k}} * Desired\right)[x] \equiv \sum_{k=-\infty}^{\infty} \overline{H_{i,k}[x]} \cdot Desired[x-k],$$

$$HistoricWeight_{i,k} = \sum_{\forall m} SPEH_{i,k}[m].$$

To illustrate this step, a numerical example is provided below:

Row of interest (built at STEP 1), Historic[x]:

| Source User | Target User | Events today | Events yesterday | Events 2 days ago | Events 3 days ago | Events 4 days ago | Events 5 days ago | Events 6 days ago | Events this week | Events last week | Events 2 weeks ago | Events 3 weeks ago | Events 4 weeks ago | Events 5 weeks ago | Events 6 weeks ago | Events 7 weeks ago | Events this month | Events last month | Events 2 months ago | Events 3 months ago | Events 4 months ago | Events 5 months ago | Events this year | Events last year |
|---|---|---|---|---|---|---|---|---|---|---|---|---|---|---|---|---|---|---|---|---|---|---|---|---|
| A | B | 5 | 5 | 5 | 5 | 5 | 5 | 5 | 35 | 0 | 0 | 0 | 0 | 0 | 0 | 0 | 35 | 0 | 0 | 0 | 0 | 0 | 45 | 0 |

Desired vector (Desired[x]). This vector is an external configuration parameter. The definition of the values inside this vector is out of the scope of this invention. In the example below, this Desired[x] vector is giving more relevance to the most recent events (set to 1) over the older events (set to 0.95, 0.90, 0.86, 0.95 and 0.9) and aggregated events (set to 0.3, 0.5 and 0.7).

| | | | | | | | | | | | | | | | | | | | | | | | |
|---|---|---|---|---|---|---|---|---|---|---|---|---|---|---|---|---|---|---|---|---|---|---|---|
| | | 1 | 1 | 1 | 1 | 1 | 1 | 1 | 0.3 | 1 | 1 | 1 | 1 | 0.95 | 0.90 | 0.86 | 0.95 | 1 | 1 | 1 | 0.95 | 0.9 | 0.7 | 0.95 |

Normalization process (Phase i.a). Taking the row of interest, the value of the events of this week (35) are divided by the mean of the whole row $\left(\frac{5+5+5+5+5+5+5+35+0+\cdots+0+35+0+\cdots+0+45}{23} = 6.52\right)$ which leaves the column of the events this week in 5.37.

| A | B | 5 | 5 | 5 | 5 | 5 | 5 | 5 | 5.37 | 0 | 0 | 0 | 0 | 0 | 0 | 0 | 35 | 0 | 0 | 0 | 0 | 0 | 45 | 0 |
|---|---|---|---|---|---|---|---|---|------|---|---|---|---|---|---|---|----|---|---|---|---|---|----|---|

Normalization process (Phase i.b). Taking the row obtained in phase i.a, the value of the events this month (35) are divided by the mean of the whole row $\left(\frac{5+5+5+5+5+5+5+5.37+0+\cdots+0+35+0+\cdots+0+45}{23} = 5.23\right)$ which leaves the column of the events this month in 6.69.

| A | B | 5 | 5 | 5 | 5 | 5 | 5 | 5 | 5.37 | 0 | 0 | 0 | 0 | 0 | 0 | 0 | 6.69 | 0 | 0 | 0 | 0 | 0 | 45 | 0 |
|---|---|---|---|---|---|---|---|---|------|---|---|---|---|---|---|---|------|---|---|---|---|---|----|---|

Normalization process (Phase i.c). Taking the row obtained in phase i.b, the value of the events this month (35) are divided by the mean of the whole row $\left(\frac{5+5+5+5+5+5+5+5.37+0+\cdots+0+6.69+0+\cdots+0+45}{23} = 4.00\right)$ which leaves the column of the events this month in 11.24.

| A | B | 5 | 5 | 5 | 5 | 5 | 5 | 5 | 5.37 | 0 | 0 | 0 | 0 | 0 | 0 | 0 | 6.69 | 0 | 0 | 0 | 0 | 0 | 11.24 | 0 |
|---|---|---|---|---|---|---|---|---|------|---|---|---|---|---|---|---|------|---|---|---|---|---|-------|---|

Final normalization process (Phase ii). Taking the maximum value of the row obtained in phase i.c (11.24), all the columns are divided by this number:

| A | B | 0.45 | 0.45 | 0.45 | 0.45 | 0.45 | 0.45 | 0.45 | 0.48 | 0 | 0 | 0 | 0 | 0 | 0 | 0 | 0.60 | 0 | 0 | 0 | 0 | 0 | 1 | 0 |
|---|---|------|------|------|------|------|------|------|------|---|---|---|---|---|---|---|------|---|---|---|---|---|---|---|

Historic weight computation (Phase iii). Taking the normalized vector obtained at phase ii, it is convolved with the Desired vector. The convolution (*) is computed using the formulas mentioned above.

| A | B | 0.45 | 0.45 | 0.45 | 0.45 | 0.45 | 0.45 | 0.45 | 0.48 | 0 | 0 | 0 | 0 | 0 | 0 | 0 | 0.60 | 0 | 0 | 0 | 0 | 0 | 1 | 0 |

$*$

| | | 1 | 1 | 1 | 1 | 1 | 1 | 1 | 0.3 | 1 | 1 | 1 | 1 | 0.95 | 0.90 | 0.86 | 0.5 | 1 | 1 | 1 | 0.95 | 0.9 | 0.7 | 0.95 |

$=$

$SPEH[x] =$

| 0.45 | 0.89 | 1.33 | 1.78 | 2.22 | 2.67 | 3.11 | 3.28 | 3.28 | 3.28 | 3.28 | 3.28 | 3.26 | 3.21 | 3.12 | 3.83 | 3.83 | 3.83 | 3.83 | 3.81 | 3.78 | 4.7 | 4.31 |

| 4.52 | 4.07 | 3.63 | 3.18 | 2.73 | 1.59 | 1.97 | 1.30 | 1.60 | 1.60 | 1.55 | 1.47 | 1.40 | 0.92 | 1.57 | – | – | 0.95 | 0.9 | 0.7 | 0.95 | 0 |

And finally, when summing all the points of the SPEH[x] vector computed above, the historic weight of the dyad between user A and user B is obtained. HistoricWeight = 0.45 + 0.89 + 1.33 + ... + 4.7 + 4.31 + 4.52 + 4.07 + 3.63 + ... + 0.7 + 0.95 + 0 = 108.94.

STEP 3: Event Dyad Aggregator 23. This step collects all historic weights (also referred to as HistoricWeight[x] vector) concerning different events from the same dyad and provides with a final weight. Assuming that each event k from each source i has an associated adjusting factor $\gamma_{i,k}$, the final weight for dyad Dthat takes into account all the events of a source i (FinalWeight$_i$[D]) is computed as:

$$FinalWeight_i[D] = \sum_{\forall k} \gamma_{i,k} \cdot HistoricWeight_{i,k}[D].$$

Therefore, this invention presents a method that measures the social trust between users from different sources. Indeed, the distance weight that the invention provides is understood as the social distance since it takes into account the real relevance of each event used to weight the requested dyad.

Scenarios where this invention may be applied consist on systems that calculates social trust and path between two users, given their identifiers (either e-mail, telephone number, SN identifier, ...). For example:

- A portal where users look for a room to rent and for classmates.
- A portal where families look for household services, cleaning services, senior care, babysitting service.
- A portal where companies recruit workers and workers find out companies.

In these sorts of portals, you can check against other users your "social trust" with them, as well as ordering the resulting search by proximity.

Thus, for social trust, one embodiment of the invention returns:

- The value of the final weight calculated, *FinalWeight$_i$[D]*.
- The social path, that is the shortest path that joins the given 2 users, containing the users (nodes) that conforms it, as well as the relative social distance: *w$_i$*.
- Relationship width: that is the amount of paths that are found between the 2 users with the least number of hops.

**Claims**

1. Method for estimating proximity between two end users of communication services, the method is **characterized by** comprising the next steps:

- obtaining the communications established between said two users in a certain period of time previously set;
- assigning weights to each communication depending on the communication service used for the communication;
- comparing a distribution along the time of the weighted communications obtained in previous step with a desired time pattern set previously;
- assigning a second weight to each communication according to the comparison with the desired time pattern of previous step;
- assigning a level of relevance to each communication depending on the type of communication used;
- outputting a final weight, depending on all the weights assigned previously and the level of relevance of each communication between the two users, as an estimation of their proximity.

2. Method according to previous claim wherein the communications services can be a telephone service and/or mobile phone service and/or online services and/or email service and/or chats and/or Internet social networks as Facebook, Twitter or LinkedIn.

3. Method according to previous claims wherein the type of communication can be a call and/or a SMS and /or a MMS and/or a chat and/or a videoconference and/or a Facebook comment and/or an email, etc...

4. Method according to previous claim further comprising assigning an identity for each user gathering personal data which said user shares on the communication services.

5. Method according to claim 4 further comprising assigning a level of confidence to the personal data gathered from the communication services depending on the way each communication service validate said personal data.

6. Method according to any one of previous claims wherein the step of comparing the distribution along the time of the communications with a desired time pattern is made using a convolution operator.

7. Method according to any one of previous claims where in the case of the communications between two users are null, the final weight between said two users is obtained as an aggregation of the final weights between users which have direct or indirect communication with the two users.

8. A computer program comprising program code means adapted to perform the steps of the method according to any claims from 1 to 7 when said program is run on a general purpose processor, a digital signal processor, a FPGA, an ASIC, a microprocessor, a micro-controller, or any other form of programmable hardware.

**FIG. 1**

**FIG. 2**

**FIG. 3**

**FIG. 4**

**CDR /WDR RAW DATA** — 41

| USER | USER | DATE | EVENT |
|---|---|---|---|
| A | B | DATE1 | EVENT 1 |
| C | B | DATE 2 | EVENT 2 |
| A | B | DATE 3 | EVENT 2 |
| C | A | DATE 4 | EVENT 3 |
| C | A | DATE 5 | EVENT 1 |
| B | A | DATE 6 | EVENT 4 |
| ... | ... | ... | ... |

Dyad 1 — 42

| A | B |
|---|---|
| Events today | |
| Events yesterday | |
| Events 2 days ago | |
| Events 3 days ago | |
| ... | |
| Events 5 months ago | |
| Events this year | |
| Events last year | |

Dyad 2 — 43

| C | B |
|---|---|
| Events today | |
| Events yesterday | |
| Events 2 days ago | |
| Events 3 days ago | |
| ... | |
| Events 5 months ago | |
| Events this year | |
| Events last year | |

Dyad 3 — 44

| C | A |
|---|---|
| Events today | |
| Events yesterday | |
| Events 2 days ago | |
| Events 3 days ago | |
| ... | |
| Events 5 months ago | |
| Events this year | |
| Events last year | |

Europäisches
Patentamt

European
Patent Office

Office européen
des brevets

**EUROPEAN SEARCH REPORT**

Application Number

EP 11 38 2403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 | 1-8 | INV. G06Q10/10 G06Q30/02 |
| L | * the whole document *<br>----- | | |

TECHNICAL FIELDS SEARCHED (IPC)

G06Q

The present search report has been drawn up for all claims

| Place of search | Date of completion of the search | Examiner |
|---|---|---|
| Munich | 30 April 2012 | Gardiner, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)